Europäisches Patentamt

European Patent Office

Office européen des brevets

(11) Publication number: **0 259 956 B1**

## EUROPEAN PATENT SPECIFICATION

(45) Date of publication of patent specification: **08.07.92**   (51) Int. Cl.⁵: **F16H 41/24**

(21) Application number: **87306207.9**

(22) Date of filing: **14.07.87**

(54) **Drive strap for torque converter.**

(30) Priority: **14.08.86 US 896375**

(43) Date of publication of application:
**16.03.88 Bulletin 88/11**

(45) Publication of the grant of the patent:
**08.07.92 Bulletin 92/28**

(84) Designated Contracting States:
**DE ES FR GB IT SE**

(56) References cited:
DE-C- 849 501          FR-A- 411 853
FR-A- 771 728          GB-A- 2 152 188
US-A- 2 858 681        US-A- 3 041 857

(73) Proprietor: **BORG-WARNER AUTOMOTIVE TRANSMISSION AND ENGINE COMPONENTS CORPORATION**
**6700 18-1/2 Mile Road P.O. Box 8022**
**Sterling Heights, Michigan 48311-8022(US)**

(72) Inventor: **Wang, Ting Ming**
**31628 Tecla**
**Warren Michigan 48093(US)**

(74) Representative: **Allden, Thomas Stanley et al**
**A.A. THORNTON & CO. Northumberland House 303-306 High Holborn**
**London WC1V 7LE(GB)**

## Description

This invention relates to drive strap assemblies.

The purpose of a torque converter attaching means, such as a drive plate, is to transmit torque, under minor misalignment conditions, between a vehicle engine and a transmission. Conventionally, a drive plate is secured at its inner periphery to the engine drive shaft, such as by bolts, and rigidly secured, as by bolts and/or alignment pins, to the housing for the torque converter; which housing is connected to and drives the impeller or pump of the torque converter.

The attaching means between the engine drive shaft and the torque converter must be flexible enough to accommodate minor misalignment, but must be stiff enough to avoid excessive axial movement of the torque converter. A drive strap would appear to be an economical way to achieve the function of transmitting torque. However, such a strap is generally too flexible to limit the axial movement of the converter under thrust load.

In US-A-2858681 there is generally disclosed a drive strap assembly comprising an elongated relatively flexible drive strap secured at its opposite ends respectively to an engine flywheel and a torque converter housing to transmit torque therebetween, the drive strap being arranged so that its thickness extends in an axial direction with respect to the axis of rotation of the engine flywheel and the torque converter housing, the drive strap also being arranged so that it extends lengthwise between its opposite ends.

More particularly, the drive strap extends lengthwise between its opposite ends chordally with respect to a circumference about the axis of rotation, the drive strap functioning to transmit drive directly from the engine flywheel to the torque converter housing in a straight line coinciding with the major axis of the drive strap. The drive strap is, preferably, of spring steel and will permit a degree of axial movement of the torque converter housing with respect to the engine flywheel, the drive strap bending at such time about its end secured to the engine flywheel.

In accordance with the present invention as claimed, the aforesaid generally disclosed drive strap assembly is characterized in that a pair of relatively stiff back-stops is provided which sandwich the thickness of the drive strap and extend over a substantial part of the length thereof with the free ends of the back stops oppositely outwardly curved away from the drive strap such that relative axial movement between the torque converter housing and the engine flywheel will cause the drive strap to deflect to engage the face of one or the other of the curved ends of the back-stops at different locations thereof dependent on the extent of such axial movement such as to decrease the moment arm of the drive strap with increasing relative axial movement between the torque converter housing and the engine flywheel so that the axial stiffness of the drive strap will increase with increasing strap deflection.

The invention is advantageous in that the drive strap has sufficient flexibility for accommodating minor misalignment between the vehicle engine and the torque convertor of its transmission whilst transmitting torque therebetween whilst being sufficiently stiff to restrict excessive axial movement of the torque converter both towards and away from the engine.

Attention is also drawn to FR-A-771 728 which discloses a forward and backward torsion damper, wherein a leaf spring is sandwiched between two back-stops against which the leaf spring is progressively applied.

In order that the invention may be well understood there will now be described an embodiment thereof, given by way of example, reference being made to the accompanying drawing, in which:

Figure 1 is a partial cross sectional view of a flywheel and torque converter connected by a drive strap assembly embodying the invention;

Figure 2 is an enlarged side elevational view of the same drive strap assembly;

Figure 3 is an enlarged plan view of the same drive strap assembly; and

Figure 4 is a side elevational view similar to Figure 2, but showing the drive strap in a flexed condition.

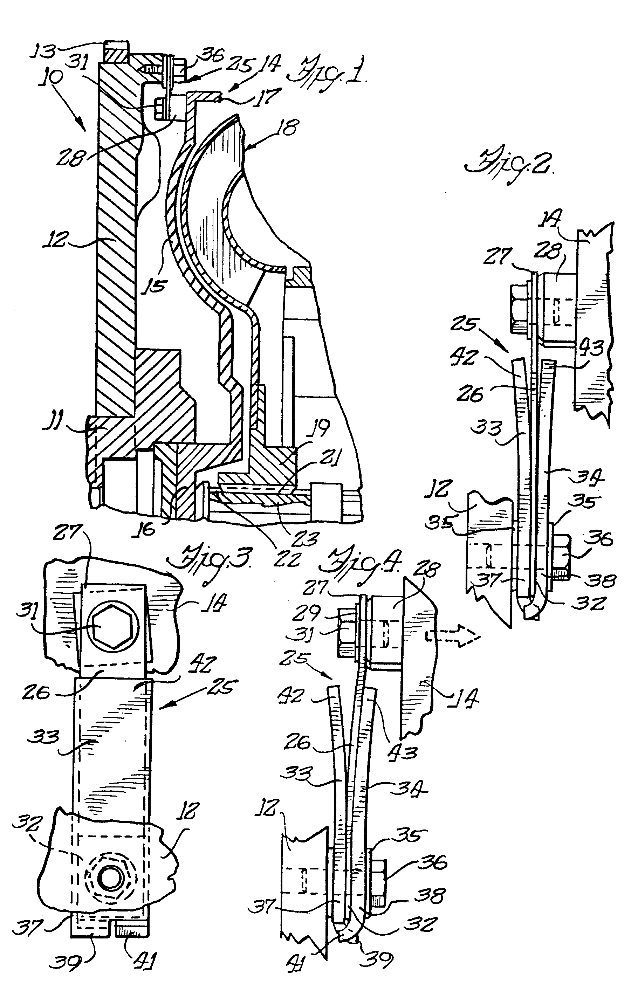

Referring first to Figure 1, there is shown a torque converter assembly 10 including a drive hub 11 suitably secured to the engine drive shaft (not shown) and suitably secured to a flywheel 12 having starter gear teeth 13 on its outer periphery. A torque converter housing 14 includes a generally radial portion 15 journalled at its inner periphery 16 within the drive hub 11 and an outer housing portion 17 extending over the turbine 18 and the impeller (not shown) to which it is drivingly connected. The turbine 18 is of conventional construction and includes an inner turbine hub 19 having internal splines 21 engaging the external splines 22 of a transmission input shaft 23 extending to the vehicle transmission (not shown).

Drivingly connecting the engine flywheel 12 with the torque converter housing 14 are a plurality of circumferentially spaced drive strap assemblies 25 which provide sufficient flexibility for minor misalignment but which have sufficient stiffness to limit axial movement of the torque converter under thrust load. Each assembly 25 includes one or more flexible drive straps 26 connected at one end 27 by a washer 29 and bolt 31 to a mounting boss 28 welded to the torque converter housing 14. The opposite end 32 of the drive strap is sandwiched between a pair of back-stops 33 and 34 and secured to the flywheel 12 by washers 35 and a bolt 36.

Each back-stop 33 and 34 is very stiff and provided with an inner end 37 and 38 having a bent lip 39 and 41 and with an outwardly curved free end 42 and 43, respectively. Each bent lip 39 and 41 is one-half the width of the back-stop to interengage as shown in Figure 3. The radius of each drive strap free end 42 and 43 is designed to limit the forward and rearward thrust of the torque converter assembly. The lips 39,41 of the back-stops 33 and 34 at the flywheel end act to engage each other and the drive strap end 32 during assembly to keep the back-stops and drive strap parallel to each other after attachment.

As the converter assembly 10 moves rearward and forward, as seen in Figure 4, each flexible drive strap 26 moves along the face of one or the other back-stop 33 or 34 decreasing the moment arm of drive strap 26 between the mounting boss 28 and flywheel attachment bolt 36, thus increasing the spring rate of the drive strap. Therefore, the result of using the back-stops is a characteristic of increasing axial stiffness as strap deflection increases. This is because of the fact that the effective lever arm of the drive strap is being reduced as the strap is deflected against the stiff, curved back-stop; the stiffness or spring rate of the strap varying as a function of the deflection.

## Claims

1. A drive strap assembly comprising an elongated relatively flexible drive strap (26) secured at its opposite ends (27, 32) respectively to an engine flywheel (12) and a torque converter housing (14) to transmit torque therebetween, the drive strap (26) being arranged so that its thickness extends in an axial direction with respect to the axis of rotation of the engine flywheel (12) and the torque converter housing (14), the drive strap (26) also being arranged so that it extends lengthwise between its opposite ends (27, 32), characterised in that a pair of relatively stiff back-stops (33, 34) is provided which sandwich the thickness of the drive strap (26) and extend over a substantial part of the length thereof with the free ends (42, 43) of the back stops (33, 34) oppositely outwardly curved away from the drive strap (26) such that relative axial movement between the torque converter housing (14) and the engine flywheel (12) will cause the drive strap (26) to deflect to engage the face of one or the other of the curved ends (42, 43) of the back-stops (33, 34) at different locations thereof dependent on the extent of such axial movement such as to decrease the moment arm of the drive strap (26) with increasing relative axial movement between the torque converter housing (14) and the engine flywheel (12) so that the axial stiffness of the drive strap (26) will increase with increasing strap deflection.

2. A drive strap assembly as claimed in claim 1, wherein the back-stops (33, 34) are secured at one end (37, 38) with the end (32) of the drive strap (26) to the engine flywheel (12).

3. A drive strap assembly as claimed in claim 1 or claim 2, wherein the fixed end (37; 38) of each back-stop (33; 34) is provided with an inturned lip (39; 41) engaging the end (32) of the drive strap (26).

4. A drive strap assembly as claimed in claim 3, wherein the lips (39, 41) of the back-stops (33, 34) are offset to interlock together and interact with the drive strap (26) to retain the drive strap (26) and back-stops (33, 34) parallel to each other.

## Revendications

1. Ensemble lame d'entraînement comprenant une lame d'entraînement allongée (26), relativement flexible, fixée à ses extrémités opposées (27, 32) respectivement à un volant (12) de moteur et à un carter (14) de convertisseur de couple pour transmettre le couple entre ces deux éléments, la lame d'entraînement (26) étant agencée de manière que son épaisseur s'étende dans une direction axiale par rapport à l'axe de rotation du volant (12) du moteur et du carter (14) du convertisseur de couple, la lame d'entraînement (26) étant aussi agencée de manière à s'étendre longitudinalement entre ses extrémités opposées (27, 32), caractérisé en ce qu'il est prévu une paire d'appuis (33, 34) relativement rigides, qui encradrent l'épaisseur de la lame d'entraînement (26) et s'étendent sur une partie notable de sa longueur, les extrémités libres (42, 43) des appuis (33, 34) étant recourbées vers l'extérieur l'une en sens inverse de l'autre, dans le sens qui s'éloigne de la lame d'entraînement (26), de telle manière que le déplacement axial relatif entre le carter (14) du convertisseur de couple et le volant (12) du moteur amène la lame d'entraînement (26) à fléchir pour s'appuyer contre la face de l'une ou de l'autre des extrémités recourbées (42, 43) des appuis (33, 34) en des points de ces appuis qui varient selon l'amplitude de ce mouvement axial, de manière à réduire le bras de levier de la lame d'entraînement (26) avec l'accroissement du mouvement axial relatif entre le carter (14) du convertisseur de couple et le volant (12) du moteur, de sorte que la raideur axiale de la lame d'entraînement (26) croît avec l'accroissement du fléchissement de la lame.

2. Ensemble lame d'entraînement selon la revendication 1, dans lequel les appuis (33, 34) sont fixés à une première extrémité (37, 38) au volant (12) du moteur avec l'extrémité (32) de la lame d'entraînement (26).

3. Ensemble lame d'entraînement selon la revendication 1 ou la revendicationn 2, dans lequel l'extrémité fixée (37 ; 38) de chaque appui (33, 34) est munie d'une lèvre (39 ; 41) recourbée vers l'intérieur qui donne appui à l'extrémité (32) de la lame d'entraînement (26).

4. Ensemble lame d'entraînement selon la revendication 3, dans lequel les lèvres (39, 41) des appuis (33, 34) sont décalées pour se verrouiller mutuellement et interagir avec la lame d'entraînement (26) pour retenir la lame d'entraînement (26) et les appuis (33, 34) parallèlement l'un à l'autre.

## Patentansprüche

1. Antriebslaschenanordnung mit einer länglichen, verhältnismäßig flexiblen Antriebslasche (26), die an ihren entgegengesetzten Enden (27, 32) an einem Motorschwungrad (12) und einem Drehmomentwandlergehäuse (14) zum Übertragen von Drehmoment befestigt ist, wobei die Antriebslasche (26) so angeordnet ist, daß ihre Dicke sich in axialer Richtung bezüglich der Drehachse des Motorschwungrades (12) und des Drehmomentenwandlergehäuses (14) erstreckt und wobei die Antriebslasche (26) so angeordnet ist, daß sie sich in Längsrichtung zwischen ihren entgegengesetzten Enden (27, 32) erstreckt, dadurch gekennzeichnet daß zwei verhältnismäßig steife Gegenhalter (33, 34) vorgesehen sind, die zwischen sich die Antriebslasche der Dicke nach einschließen und sich über einen wesentlichen Teil ihrer Länge erstrecken, wobei die freien Enden (42, 43) der Gegenhalter (33, 34) jeweils nach außen von der Antriebslasche (26) derart weggekrümmt sind, daß sich bei einer relativen axialen Bewegung zwischen dem Drehmomentenwandlergehäuse (14) und dem Motorschwungrad (12) die Antriebslasche (26) ausbiegt und abhängig vom Ausmaß der axialen Bewegung sich an unterschiedliche Stellen des einen oder anderen gekrümmten Endes (42, 43) der Gegenhalter (33, 34) anlegt, so daß der Hebelarm der Antriebslasche (26) bei anwachsender relativer axialer Bewegung zwischen dem Drehmomentengehäuse (14) und dem Motorschwungrad (12) abnimmt und damit die axiale Steifigkeit der Antriebslasche (26) mit steigender Laschenauslenkung ansteigt.

2. Antriebslaschenanordnung nach Anspruch 1, wobei die Gegenhalter (33, 34) an einem Ende (37, 38) zusammen mit dem Ende (32) der Antriebslasche (26) an dem Motorschwungrad (12) befestigt sind.

3. Antriebslaschenanordnung nach Anspruch 1 oder 2, wobei das feste Ende (37, 38) jedes Gegenhalters (33, 34) mit einer nach innen gebogenen Lippe (39, 41) versehen ist, die das Ende (32) der Antriebslasche (26) erfaßt.

4. Antriebslaschenanordnung nach Anspruch 3, wobei die Lippen (39, 41) der Gegenhalter (33, 34) zur gegenseitigen Verzahnung versetzt sind und mit der Antriebslasche (26) zusammenwirken, um die Antriebslasche (26) und Gegenhalter (33, 34) zueinander parallel zu halten.

Fig.1.

Fig.2.

Fig.3.

Fig.4.